# FASCICULE DE BREVET EUROPEEN

(11) **EP 2 900 512 B1**
(45) Date de publication et mention de la délivrance du brevet: **08.06.2016**
(21) Numéro de dépôt: 13766503.0
(22) Date de dépôt: 19.09.2013
(51) Int. Cl.: B60K 17/356, F16H 57/04, B60K 23/08

(54) **VÉHICULE MUNI D'UNE ASSISTANCE HYDRAULIQUE AMÉLIORÉE INTÉGRANT UN SYSTÈME DE GESTION DES NIVEAUX D'HUILE DANS LES CARTERS DES APPAREILS HYDRAULIQUES**
FAHRZEUG MIT VERBESSERTER HYDRAULISCHER UNTERSTÜTZUNG MIT EINEM SYSTEM ZUR ÜBERWACHUNG DES ÖLSTANDES IM GEHÄUSE DER HYDRAULISCHEN VORRICHTUNGEN
VEHICLE WITH IMPROVED HYDRAULIC ASSISTANCE INCORPORATING A SYSTEM THAT MANAGES THE OIL LEVELS IN THE CASINGS OF THE HYDRAULIC DEVICES

(30) Priorité: 28.09.2012 FR 1259198
(43) Date de publication de la demande: 05.08.2015
(73) Titulaire: Poclain Hydraulics Industrie, 60410 Verberie (FR)
(72) Inventeur: HEREN, Jean, F-60410 Verberie (FR); D'HERSIGNERIE, Cyrille, F-60410 Verberie (FR); GOUZOU, Christophe, F-60410 Verberie (FR); LAMBEY, Julien, F-60410 Verberie (FR)
(74) Mandataire: Regimbeau
(86) Numéro de dépôt international: PCT/EP2013/069517
(87) Numéro de publication internationale: WO 2014/048839

(56) Documents cités:
- DE-A1- 1 680 157
- JP-A- H01 223 030
- US-A- 3 140 041
- US-A1- 2008 283 324

## Description

### DOMAINE TECHNIQUE GENERAL

La présente invention concerne les véhicules équipés d'une assistance hydraulique sur un essieu distinct de l'essieu mené par le moteur primaire du véhicule, par exemple les véhicules pouvant ainsi passer d'une transmission de type traction ou propulsion à une transmission intégrale (voir JP01223030A).

### ETAT DE L'ART

On connait les véhicules munis d'une assistance hydraulique pouvant être enclenchée sélectivement selon les conditions d'entrainement souhaitées pour réaliser l'entrainement de tout ou parties des roues.

De tels véhicules comprennent de manière conventionnelle un moteur primaire, par exemple un moteur thermique entrainant un essieu menant, ainsi qu'une ou plusieurs pompes hydrauliques adaptés pour alimenter un ou plusieurs moteurs hydrauliques qui sont typiquement montés sur les roues ou sur un essieu mené et réalisent ainsi l'assistance hydraulique.
La ou les pompes hydrauliques sont entrainées par le moteur primaire, et sont donc disposé sur ou à proximité de l'essieu menant, typiquement dans un carter commun avec une boite de vitesse du véhicule, et un différentiel si l'essieu menant en comprend un.

Ce type de configurations permet ainsi de prélever un couple du moteur primaire pour l'appliquer sur un essieu mené.
Il en résulte cependant un déplacement de l'huile du carter de la pompe hydraulique vers le carter du moteur hydraulique, et donc plus généralement de l'essieu menant vers l'essieu mené, ce qui entraine une problématique de lubrification des carters.
En effet, cette structure entraine un risque d'accumulation de l'huile assurant la lubrification et le refroidissement dans un seul carter, et donc un risque de dégradation des appareil se trouvant dans ce carter du fait du trop-plein d'huile qui entraine un échauffement et des pertes de puissance, et dans l'autre carter du fait d'un manque d'huile.

### PRESENTATION DE L'INVENTION

La présente invention vise à proposer un système ne présentant pas de tels inconvénients.

A cet effet, l'invention propose un véhicule comprenant un châssis, un essieu menant, un essieu mené, un moteur primaire adapté pour réaliser un entrainement de l'essieu menant, et un système d'assistance hydraulique comprenant une pompe et un moteur hydraulique comprenant chacun un carte et reliés par un circuit hydraulique d'assistance,
ladite pompe hydraulique étant disposée à proximité de l'essieu menant et le moteur hydraulique étant disposé à proximité de l'essieu mené, caractérisé en ce que lesdits carter de la pompe et du moteur hydraulique sont reliés par un conduit de drainage assurant un échange d'huile entre lesdits carters, lesdits carter de la pompe et du moteur hydraulique étant configurés de manière à définir une valeur seuil du niveau d'huile dans le carter du moteur hydraulique à partir de laquelle l'huile est évacuée du carter du moteur hydraulique.

Ledit essieu mené comprend typiquement un différentiel, le différentiel de l'essieu mené et le moteur hydraulique ayant un carter commun.

Le carter de la pompe hydraulique est typiquement configuré de manière à guider l'écoulement d'huile vers le conduit de gavage.

Le véhicule peut en outre comprendre une boite de vitesse, et dans lequel ledit essieu menant comprend un différentiel, le différentiel de l'essieu menant, la boite de vitesse et la pompe ayant un carter commun.

### Selon un premier mode de réalisation,

- le carter du moteur hydraulique est un carter étanche dans lequel est inséré un volume initial d'huile, le restant du volume du carter étant rempli d'air définissant une quantité d'air,
- le carter de la pompe est un carter ouvert comprenant un échangeur d'air,
le conduit de drainage reliant le fond du carter de la pompe au fond du carter du moteur hydraulique de sorte que les orifices reliant le conduit de drainage auxdits carters soient immergés dans l'huile, la valeur seuil du niveau d'huile dans le carter du moteur hydraulique à partir de laquelle l'huile est évacuée du carter du moteur hydraulique par le conduit de drainage étant ainsi définie par la quantité d'air dans le carter du moteur hydraulique.

Selon un second mode de réalisation,
- le carter du moteur hydraulique est un carter étanche rempli d'huile,
- le carter de la pompe est un carter ouvert comprenant un échangeur d'air,
le conduit de drainage relie le fond du carter de la pompe au sommet du carter du moteur hydraulique, la valeur seuil du niveau d'huile dans le carter du moteur hydraulique à partir de laquelle l'huile est évacuée du carter du moteur hydraulique par le conduit de drainage étant ainsi le niveau d'huile pour lequel le carter du moteur hydraulique est rempli d'huile.

Selon un troisième mode de réalisation, le conduit de drainage comprend :
- une admission dans le carter de la pompe ;
- un refoulement dans le carter de la pompe ;
- une admission dans le carter du moteur hydraulique ;
- un refoulement dans le carter du moteur hydraulique ;
chacun desdits refoulements comprenant un clapet anti-retour configuré pour être passant uniquement du conduit de drainage vers chacun desdits carters, et
l'admission dans le carter de la pompe étant munie d'une soupape équipée d'un flotteur configuré pour ouvrir ladite soupape lorsque le niveau d'huile dans le carter de la pompe est au-delà d'une seconde valeur seuil,
l'admission dans le carter du moteur hydraulique étant munie d'une soupape équipée d'un flotteur définissant la valeur seuil du niveau d'huile dans le carter du moteur hydraulique à partir de laquelle l'huile est évacuée du carter du moteur hydraulique par le conduit de drainage et étant configuré pour ouvrir ladite soupape lorsque le niveau d'huile dans le carter du moteur hydraulique est au-delà de ladite valeur seuil.

Selon un quatrième mode de réalisation,
- le conduit de drainage comprend une chambre de drainage,
- le conduit de drainage est relié à la chambre de drainage au moyen d'une soupape équipée d'un flotteur définissant la valeur seuil du niveau d'huile dans le carter du moteur hydraulique à partir de laquelle l'huile est évacuée du carter du moteur hydraulique par le conduit de drainage et étant configuré pour ouvrir ladite soupape lorsque le niveau d'huile dans le carter du moteur hydraulique est au-delà de ladite valeur seuil,
ledit flotteur étant configuré de manière à ce que la chambre de drainage soit maintenue remplie d'huile,
le carter du moteur hydraulique étant dimensionné de manière à contenir un volume d'huile compris entre 0 et V1,
le carter commun à la boite de vitesse et à la pompe étant dimensionné de manière à contenir un volume d'huile V2 à une tolérance T2 près, avec T2 ≥ V1.

Le carter du moteur hydraulique comprend alors typiquement un reniflard comprenant
- une admission d'air configurée de manière à être à une altitude supérieure à celle du carter du moteur hydraulique,
- une connexion avec le carter du moteur hydraulique, ladite connexion étant positionnée à une hauteur H du carter du moteur hydraulique et définissant un niveau d'huile maximum dans ledit carter du moteur hydraulique.

Selon un cinquième mode de réalisation, le véhicule comprend en outre un conduit de de retour reliant le carter du moteur hydraulique au carter de la pompe,
le conduit de retour comprenant une pompe de retour configurée pour, lorsque ladite assistance hydraulique est en service, prélever de l'huile dans le fond du carter de la pompe hydraulique de manière à l'injecter dans le carter dudit moteur,
le conduit de drainage étant reliée au carter du moteur hydraulique de manière à définir la valeur seuil du niveau d'huile dans le carter du moteur hydraulique à partir de laquelle l'huile est évacuée du carter du moteur hydraulique par le conduit de drainage, ladite valeur seuil variant en fonction de l'inclinaison du véhicule.

Le conduit de retour est alors typiquement configuré de manière à ce que pour des valeurs d'inclinaison du véhicule comprises entre +θmax et - θmax par rapport à un plan horizontal, le volume d'huile dans ledit carter du moteur hydraulique varie entre des valeurs Vmin et Vmax, avec Vmin non nul et Vmax inférieur au volume interne dudit carter.
Le conduit de drainage peut également comprendre une pompe de drainage adaptée pour assurer la circulation de l'huile du carter du moteur hydraulique vers le carter de la pompe hydraulique, ladite pompe de drainage étant couplée à un essieu dudit véhicule de manière à ce que la rotation des roues du véhicule entraine une mise en service de la pompe de drainage.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 est une représentation schématique d'un véhicule selon un aspect de l'invention ;
- La figure 2 présente une vue plus détaillée des différents composants pouvant être disposés dans les carters présentés sur la figure 1 ainsi que des circuits hydrauliques associés ;
- Les figures 3, 4 et 5 présentent l'effet de l'inclinaison du véhicule sur les échanges d'huile entre les carters ;
- Les figures 6 à 9 présentent d'autres modes de réalisation de véhicules selon l'invention.

Sur l'ensemble des figures, les éléments communs sont repérés par des références numériques identiques.

### DESCRIPTION DETAILLEE

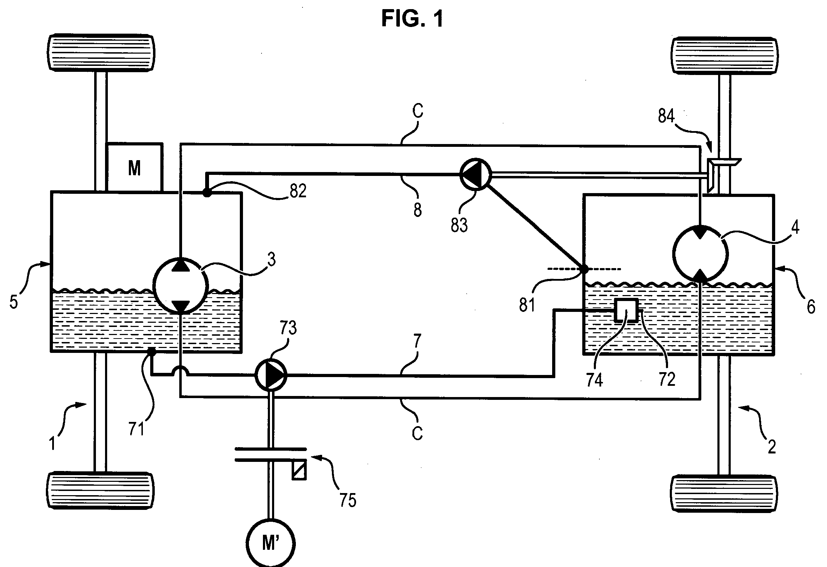

La figure 1 est une représentation schématique d'un mode de réalisation d'un véhicule selon un aspect de l'invention, comprenant un essieu menant 1 entrainé par un moteur primaire M, et un essieu mené 2. Le moteur primaire M est typiquement un moteur thermique. Chacun des essieux comprend par exemple deux roues comme représenté sur la figure 1, d'autres variantes étant bien entendu possibles.

Les essieux menant 1 et mené 2 comprennent chacun un appareil hydraulique afin de réaliser une assistance hydraulique pouvant être activée par l'utilisateur.

Dans le mode de réalisation représenté, une pompe hydraulique 3 est disposée à proximité de l'essieu menant 1, et un moteur hydraulique 4 est disposé à proximité de l'essieu mené 2.

Par disposés à proximité, on entend que les appareils hydrauliques sont montés par exemple sur l'essieu considéré afin de réaliser son entrainement ou afin d'être entrainés par ledit essieu. Par exemple, un appareil hydraulique ainsi monté sur un essieu a son stator fixé au châssis fixe du véhicule, et son rotor lié en rotation à l'essieu tournant considéré.
Ces deux appareils hydrauliques 3 et 4 sont reliés entre eux par un circuit hydraulique C permettant à la pompe hydraulique 3 d'alimenter le moteur hydraulique 4 en pression et ainsi permettre à ce dernier de réaliser l'entrainement de l'essieu mené 2. On comprend bien que les appareils hydrauliques 3 et 4 peuvent présenter un fonctionnement inverse par exemple lors du freinage du véhicule, les appareils hydrauliques étant réversibles.

La pompe hydraulique 3 est adaptée pour être entrainée par le moteur primaire M de manière sélective, et ainsi prélever un couple fourni par le moteur primaire M à l'essieu menant 1 pour le transmettre à l'essieu mené 2 par l'intermédiaire du moteur hydraulique 4.

Chacun de ces appareils hydrauliques 3 et 4 est disposé dans un carter, respectivement 5 et 6 comprenant chacun un volume d'huile réalisant la lubrification et le refroidissement des différents composants qui y sont disposés.

Les carters 5 et 6 de la pompe hydraulique 3 et du moteur hydraulique 4 sont en outre reliés par des conduits assurant un échange d'huile entre lesdits carters, de manière à maintenir le niveau d'huile dans chacun desdits carters dans une plage de valeurs donnée.

Plus précisément, lesdits carters 5 et 6 tels que représentés sont reliés d'une part par un conduit de retour 7 reliant un point d'admission 71 situé dans le fond du carter 5 de la pompe hydraulique 3 avec un point de refoulement 72 dans le carter 6 du moteur hydraulique 4, et d'autre part par un conduit de drainage 8 reliant un point d'admission 81 situé à une hauteur seuil du carter 6 du moteur hydraulique 4 à un point de refoulement 82 dans le carter 5 de la pompe hydraulique 3.
Le fond du carter 5 est avantageusement configuré de manière à former une cuvette guidant l'huile vers le point d'admission 71.

Le conduit de retour 7 comprend avantageusement une pompe de retour 73 associée à la pompe hydraulique 3, de sorte que la mise en service de la pompe hydraulique 3 entraine également la mise en service de la pompe de retour 73, ce qui réalise un transfert d'huile du carter 5 de la pompe hydraulique 3 vers le carter 6 du moteur hydraulique 4.
Par associée, on entend que la pompe de retour 73 est activée conjointement ou préalablement à la mise en service de la pompe hydraulique 3. Dans le mode de réalisation représenté, la pompe de retour 73 est reliée à un moteur M' via un embrayage 75 à commande électrique.
Le moteur M' peut être le moteur primaire M du véhicule, ou un moteur distinct.
Le point d'admission 71 du conduit de gavage est situé au fond du carter 5 de manière à s'assurer que ce point d'admission 71 soit toujours baigné dans l'huile.
Le refoulement dans le carter 6 du moteur hydraulique 4 est typiquement réalisé au moyen d'un bloc-valve de gavage 74, configuré de manière à ce que l'huile acheminée via le conduit de retour 7 soit répartie entre le circuit hydraulique C afin d'en réaliser un gavage, et le carter 6 du moteur hydraulique 4 pour y assurer le maintien d'un niveau d'huile pour sa lubrification et son refroidissement.

Le conduit de drainage 8 est adapté pour définir une valeur seuil du niveau d'huile dans le carter 6 du moteur hydraulique 4 à partir de laquelle l'huile est acheminée vers le carter 5 de la pompe hydraulique 3, ladite valeur seuil variant en fonction de l'inclinaison du véhicule.

Plus précisément, le point d'admission 81 du conduit de drainage 8 est disposé à une hauteur prédéterminée du carter 6 du moteur hydraulique, de manière à ce que lorsque l'huile se trouvant dans ce carter 6 atteint ce point d'admission 81, elle soit transférée vers le carter 5 de la pompe hydraulique 3.
On comprend bien que l'inclinaison du véhicule influe sur le volume d'huile qui peut ainsi être conservé dans le carter 6 du moteur hydraulique 4.
En effet, pour un volume d'huile V donné, le point d'admission 81 sera ou non atteint en fonction de son emplacement et de l'inclinaison du véhicule.
On prend pour cela en considération une valeur d'inclinaison maximale pour un véhicule donné afin de positionner le point d'admission 81 et ainsi s'assurer que le volume d'huile dans le carter 6 du moteur hydraulique 4 est compris entre une valeur seuil inférieure Vinf et une valeur seuil supérieure Vsup, ces deux valeurs seuil Vinf et Vsup étant calibrées de manière à assurer une lubrification et un refroidissement optimal des différents composants disposés dans le carter 6, et notamment de manière à éviter que ce carter 6 soit entièrement rempli d'huile ce qui entrainerait des pertes et un échauffement important.

Le conduit de drainage 8 est avantageusement un conduit passif, c'est-à-dire qu'il s'agit d'un conduit ne nécessitant pas la mise en fonctionnement d'appareils pour fonctionner, et le transfert d'huile par ce conduit de drainage 8 peut donc s'effectuer même lorsque l'assistance hydraulique n'est pas mise en service.

En variante, le conduit de drainage 8 peut comprendre une pompe de drainage 83 adaptée pour être mise en service avec le moteur hydraulique 4, ou pour être entrainée par la rotation de l'essieu mené 2. Dans le mode de réalisation représenté, la pompe de drainage 83 est liée à l'essieu 2 au moyen de pignons coniques 84, de sorte que la rotation de l'essieu 2 entraine le fonctionnement de la pompe de drainage 83.
Une telle pompe permet de s'assurer de la circulation de l'huile du carter 6 vers le carter 5, la circulation dans le sens inverse étant assurée notamment par la pompe de retour 73.
En outre, le fait d'entrainer la pompe par la rotation de l'essieu mené 2 permet d'assurer la circulation d'huile même quand les appareils hydrauliques ne sont pas en service. La pompe de drainage 83 est alors avantageusement configurée de manière à pouvoir fonctionner à vide.

La structure de véhicule ainsi décrite s'adapte à de nombreuses configurations d'essieux et de transmission.
On comprend bien en effet que la figure 1 présente un exemple de structure comprenant un unique essieu menant et un unique essieu mené, mais que cette structure s'applique également pour un véhicule ayant un nombre plus important d'essieux munis de composants pour lesquels il est nécessaire d'assurer une lubrification et un refroidissement.
Les essieux menant 1 et mené 2 comprennent ainsi chacun avantageusement un différentiel auquel est couplé l'appareil hydraulique 3 ou 4 associé à l'essieu concerné, lesdits différentiels étant alors typiquement disposés dans le même carter que l'appareil hydraulique associé.
L'essieu menant 1 est de plus typiquement associé à une boite de vitesse interposée entre le moteur primaire M et l'essieu menant 1 ou le cas échéant le différentiel associé. Cette boite de vitesse est alors typiquement disposée dans le même carter que l'appareil hydraulique associé, en l'occurrence le carter 5 de la pompe hydraulique 3.

De plus, bien que les figures présentent un exemple de véhicule de type traction, c'est-à-dire avec son essieu menant 1 à l'avant, on comprend bien que la structure proposée ne se limite pas à ce type de véhicules, et présente un fonctionnement similaire que l'essieu menant soit à l'avant ou l'arrière du véhicule.

Le carter 5 de la pompe 3 et/ou le carter 6 du moteur 4 comprennent typiquement un moyen de contrôle du niveau d'huile.
Plusieurs types de moyen de contrôle du niveau d'huile peuvent être utilisés. On peut ainsi aménager des sections transparentes dans les carters 5 et/ou 6 de sorte qu'un observateur extérieur au carter puisse constater facilement le niveau d'huile. En variante, on peut aménager des ouvertures dans les carters 5 et/ou 6 qui sont obturées par des bouchons, que l'utilisateur peut ôter afin de contrôler le niveau d'huile soit directement visuellement, soit au moyen d'une jauge.

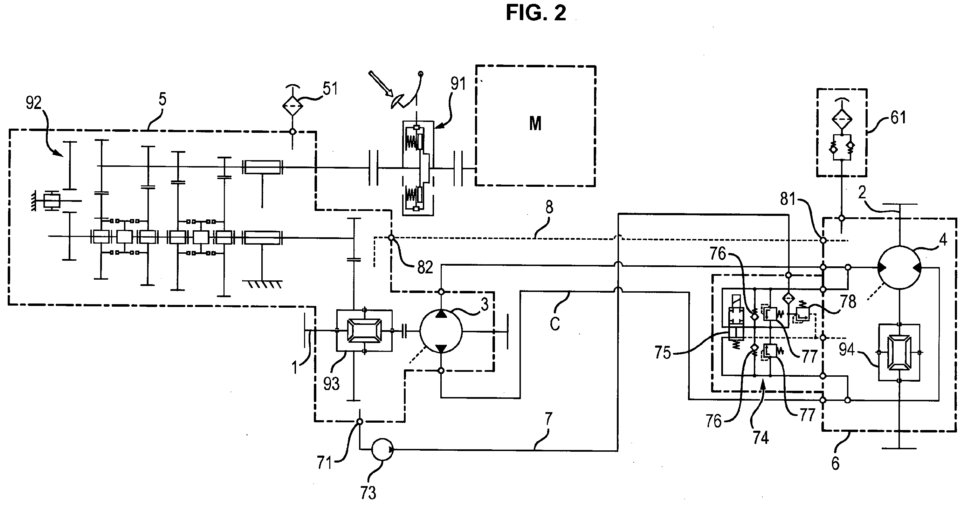

La figure 2 présente une vue plus détaillée des différents composants pouvant être disposés dans les carters 5 et 6, ainsi que des circuits hydrauliques associés.

On représente ainsi sur cette figure un embrayage 91, une boite de vitesse 92 et un différentiel menant 93.
L'embrayage 91 permet de coupler de manière sélective le moteur primaire M à la boite de vitesse 92. Le différentiel menant 93 est monté sur l'essieu menant 1, et le divise en deux demi-essieux pouvant tourner à des vitesses distinctes. Le différentiel menant 93 est également relié à un arbre de sortie de la boite de vitesse 92 qui lui applique un couple d'entrée.

De la même manière, l'essieu mené 2 tel que présenté comprend un différentiel mené 94, qui le divise en deux demi-essieux pouvant tourner à des vitesses distinctes.
Un exemple de structure de bloc-valve de gavage 74 est présenté sur cette figure ; le bloc-valve de gavage 74 comprend ainsi
- un distributeur 75 pouvant alterner entre une configuration où il permet de relier directement le conduit de retour 7 au circuit hydraulique C, et une configuration dans laquelle cette liaison est obturée,
- deux valves anti-retour 76 tarées et deux limiteurs de pression 77 liant le conduit de retour 7 au circuit hydraulique C, et
- un limiteur de pression 78 liant le conduit de retour 7 au volume interne du carter 6.

Dans cette variante, la boite de vitesse 92, le différentiel menant 93 et la pompe hydraulique 3 sont tous disposés dans le même carter 5, tandis que le moteur hydraulique 4 et le différentiel mené 94 sont disposés dans le même carter 6.

Chacun des carters 5 et 6 comprend en outre un reniflard, respectivement 51 et 61, permettant d'évacuer les vapeurs d'huile dans les carters, et taré pour limiter les différentiels de pression pouvant découler notamment d'échauffements en fonctionnement, et de différences dues aux variations de température par exemple dans le cadre d'un cycle journalier du véhicule.
Le reniflard 61 du carter 6 du moteur hydraulique 4 est avantageusement calibré de manière à maintenir une pression suffisante dans ledit carter 6 pour que l'huile soit renvoyée vers le carter 5 via le conduit de drainage 8 lorsque le niveau d'huile est suffisant, par un effet de pompe en raison de la surpression dans le carter 6.
On peut par exemple utiliser un reniflard 61 taré plus faiblement pour l'entrée que pour la sortie du carter 6, ou encore un reniflard 61 ne permettant que l'entrée d'air dans le carter 6.
Un tel reniflard 61 peut par exemple constituer une alternative à l'ajout d'une pompe sur le conduit de drainage 8.

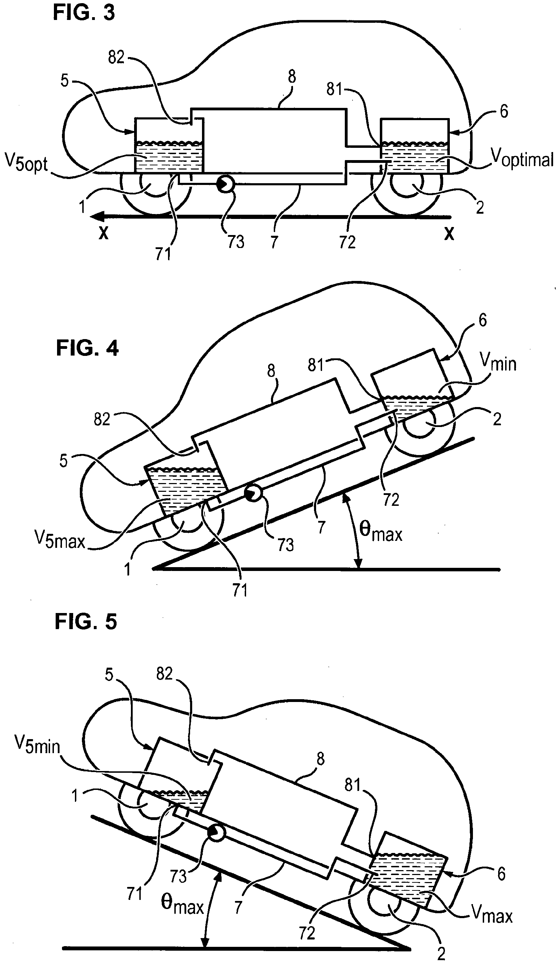

Les figures 3, 4 et 5 présentent l'effet de l'inclinaison du véhicule sur les échanges d'huile entre les carters 5 et 6.
On représente de manière simplifiée sur ces figures un châssis de véhicule comprenant un essieu menant 1 et un essieu mené 2, ainsi que les carters 5 et 6 tels que déjà présentés précédemment, par exemple avec une structure telle que présentée sur la figure 2.
On représente également sur ces figures un plan horizontal X-X, par rapport auquel le véhicule est calibré pour pouvoir s'incliner d'un angle θₘₐₓ.
La figure 3 représente le véhicule roulant sur une surface horizontale. L'admission 81 du conduit de drainage 8 est avantageusement positionnée de manière à ce que le volume d'huile dans le carter 6 soit optimal ; on le représente sur cette figure par la surface hachurée Vₒₚₜᵢₘₐₗ.
Dans cette configuration, le volume d'huile dans le carter 5 est avantageusement également égal à sa valeur optimale V5opt.
La figure 4 représente le véhicule sur un plan incliné vers l'avant d'un angle θmax, correspondant par exemple à l'inclinaison maximale pour laquelle le véhicule est adapté à rouler.
On voit clairement sur cette figure que le volume d'huile dans le carter 6 diminue du fait de l'inclinaison du carter 6 jusqu'à atteindre une valeur Vmin, le volume d'huile dans le carter 5 étant alors à sa valeur maximale V5max.
La figure 5 représente le véhicule sur un plan incliné vers l'arrière de l'angle θmax.
On voit clairement sur cette figure que le volume d'huile dans le carter 6 augmente du fait de l'inclinaison du carter 6 jusqu'à atteindre sa valeur maximale Vmax, le volume d'huile dans le carter 5 étant alors à sa valeur minimale V5min.

En fonctionnement, le volume d'huile dans le carter 6 sera donc compris entre Vmin et Vmax selon les conditions d'utilisation, ces deux valeurs étant avantageusement centrées sur la valeur Voptimal correspondant au volume optimal d'huile dans le carter 6 pour assurer la lubrification et le refroidissement des composants qu'il contient.

De plus, cette structure permet d'éviter que toute l'huile soit accumulée dans le carter 6 au détriment du carter 5, et que le carter 6 soit entièrement rempli d'huile.

Les conduits assurant un échange d'huile entre les deux carters 5 et 6 permettent ainsi d'assurer une lubrification et un refroidissement optimisés d'une pluralité de composants du véhicule.

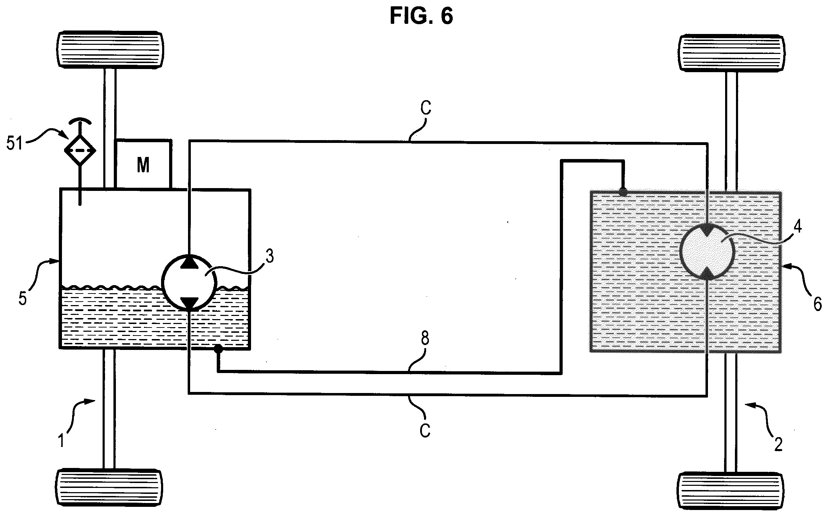

La figure 6 présente un autre mode de réalisation de véhicule selon un aspect de l'invention.

Dans ce mode de réalisation, le carter 6 du moteur hydraulique 4 est un carter étanche rempli d'huile.
Le carter 5 de la pompe 3 est un carter ouvert comprenant un échangeur d'air, ici un reniflard 51 comme déjà décrit précédemment.

Le conduit de drainage 8 relie le fond du carter 5 de la pompe 3 au sommet du carter 6 du moteur hydraulique 4.
Ainsi, l'huile n'est évacuée du carter 6 du moteur hydraulique 4 que de l'excédent d'huile par rapport au volume du carter 6 du moteur hydraulique 4. Le carter 6 du moteur hydraulique 4 est alors maintenu rempli d'huile.

On définit ainsi la valeur seuil du niveau d'huile dans le carter 6 du moteur hydraulique 4 à partir de laquelle l'huile est évacuée du carter 6 du moteur hydraulique 4 par le conduit de drainage 8 comme étant le niveau d'huile pour lequel le carter 6 du moteur hydraulique 4 est rempli d'huile.

Ce mode de réalisation permet de s'assurer que le carter 6 du moteur hydraulique 4 n'est en aucun cas vidé d'huile. On peut alors se contenter de contrôler le volume d'huile dans le carter 5 de la pompe 3. Ce mode de réalisation est de plus facile à implémenter et ne nécessite que peu de composants additionnels. Il permet également d'avoir des altitudes différentes entre le carter 5 de la pompe 3 et le carter 6 du moteur hydraulique 4.

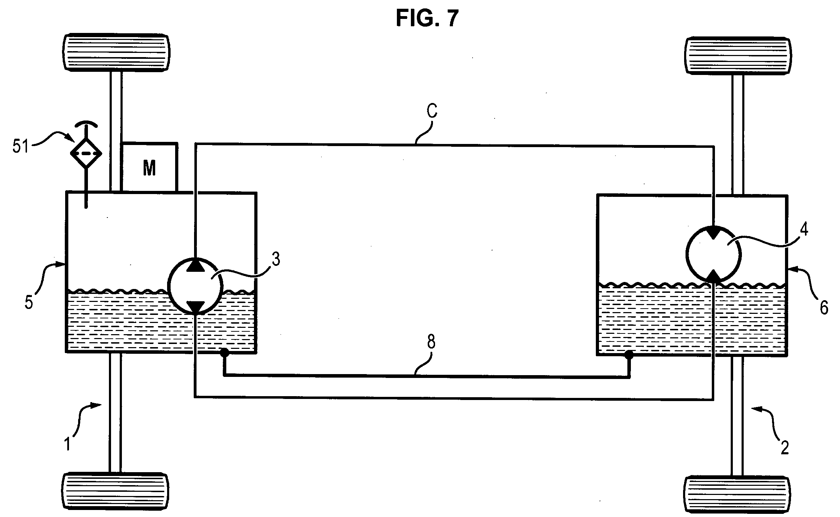

La figure 7 présente un autre mode de réalisation de véhicule selon un aspect de l'invention.

Dans ce mode de réalisation, le carter 6 du moteur hydraulique 4 est un carter étanche dans lequel est inséré un volume initial d'huile, le restant du volume du carter 6 du moteur hydraulique 4 étant rempli d'air définissant une quantité d'air.
Le carter 5 de la pompe 3 est quant à lui un carter ouvert comprenant un échangeur d'air, ici un reniflard 51.
Le conduit de drainage 8 relie le fond du carter 5 de la pompe 3 au fond du carter 6 du moteur hydraulique 4.
Les orifices reliant le conduit de drainage 8 à chacun des carters 5 et 6 sont ainsi en permanence immergés dans l'huile.

Le carter 6 du moteur hydraulique 4 étant un carter étanche, la quantité d'air qu'il contient reste constante.
Par conséquent, cette quantité d'air exerce un rôle de moyen de rappel pour l'huile dans le carter 6 du moteur hydraulique 4.
Si la quantité d'huile dans le carter 6 du moteur hydraulique 4 augmente, la pression de l'air augmente, ce qui exerce donc un effort de poussée de manière à en évacuer l'huile pour la ramener à son volume initial.
Inversement, si la quantité d'huile dans le carter 6 du moteur hydraulique 4 diminue ; la pression de l'air diminue ce qui provoque une aspiration d'huile dans le carter 6 du moteur hydraulique 4 pour la ramener à son volume initial.

La valeur seuil du niveau d'huile dans le carter 6 du moteur hydraulique 4 à partir de laquelle l'huile est évacuée du carter 6 du moteur hydraulique 4 par le conduit de drainage 8 est ainsi définie par la quantité d'air dans le carter 6 du moteur hydraulique 4.
La variation de température au sein du carter 6 du moteur hydraulique 4 entraine des variations de volume de la quantité d'air introduite dans le carter 6 du moteur hydraulique 4, ces variations étant calculées pour que la variation du niveau d'huile dans le carter 6 du moteur hydraulique 4 soit sans influence sur le moteur hydraulique 4.

Ce mode de réalisation est avantageux du nombre très faible de pièces qu'il nécessite.
Du fait de l'effet de rappel de la quantité d'air, il permet également d'avoir des altitudes différentes entre le carter 5 de la pompe 3 et le carter 6 du moteur hydraulique 4.
Enfin, la trainée de ce mode de réalisation est plus faible par rapport aux modes de réalisation dans lesquels le carter 6 du moteur hydraulique 4 est plein.

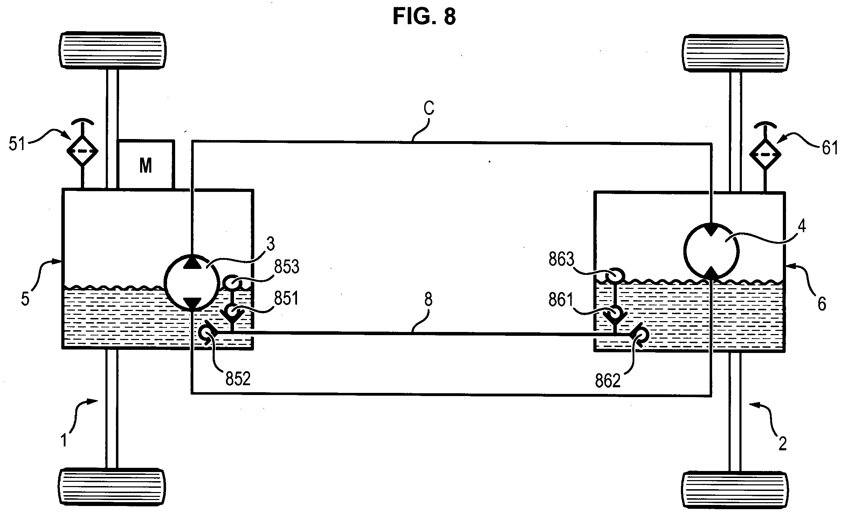

La figure 8 présente un autre mode de réalisation de véhicule selon un aspect de l'invention.

Dans ce mode de réalisation, le conduit de drainage 8 comprend :
- une admission 851 dans le carter 5 de la pompe 3 ;
- un refoulement 852 dans le carter 5 de la pompe 3 ;
- une admission 861 dans le carter 6 du moteur hydraulique 4 ;
- un refoulement 862 dans le carter 6 du moteur hydraulique 4.

Chacun des refoulements 852 et 862 comprend un clapet anti-retour configuré pour être passant uniquement du conduit de drainage 8 vers chacun desdits carters 5 et 6, permettant ainsi l'alimentation en huile de chacun des carters 5 et 6 par le conduit de drainage.

L'admission 851 dans le carter 5 de la pompe 3 est munie d'une soupape équipée d'un flotteur 853 configuré pour ouvrir ladite soupape lorsque le niveau d'huile dans le carter de la pompe 3 est au-delà d'une seconde valeur seuil. Ainsi, la soupape permet à l'huile de passer du carter 5 de la pompe 3 vers le conduit de drainage 8 uniquement lorsque le niveau d'huile dans le carter 5 de la pompe 3 est au-delà de cette seconde valeur seuil qui déclenche l'ouverture de la soupape par le flotteur 853.

De la même manière, l'admission 861 dans le carter 6 du moteur hydraulique 4 est également munie d'une soupape équipée d'un flotteur 863 définissant la valeur seuil du niveau d'huile dans le carter 6 du moteur hydraulique 4 à partir de laquelle l'huile est évacuée du carter 6 du moteur hydraulique 4 par le conduit de drainage 8.
Le flotteur 863 est configuré pour ouvrir ladite soupape de l'admission 861 lorsque le niveau d'huile dans le carter 6 du moteur hydraulique 4 est au-delà de ladite valeur seuil.

Ce mode de réalisation particulier présente plusieurs avantages.
Du fait du système avec flotteurs pilotant le transfert d'huile entre les carters, il ne nécessite pas d'application de pression dans les carters qui peuvent être ouverts, par exemple au moyen d'un reniflard.
Un tel mode de réalisation présente de plus une bonne stabilité avec la température. Enfin, la trainée est faible par rapport aux modes de réalisation dans lesquels le carter 6 du moteur hydraulique 4 est plein.

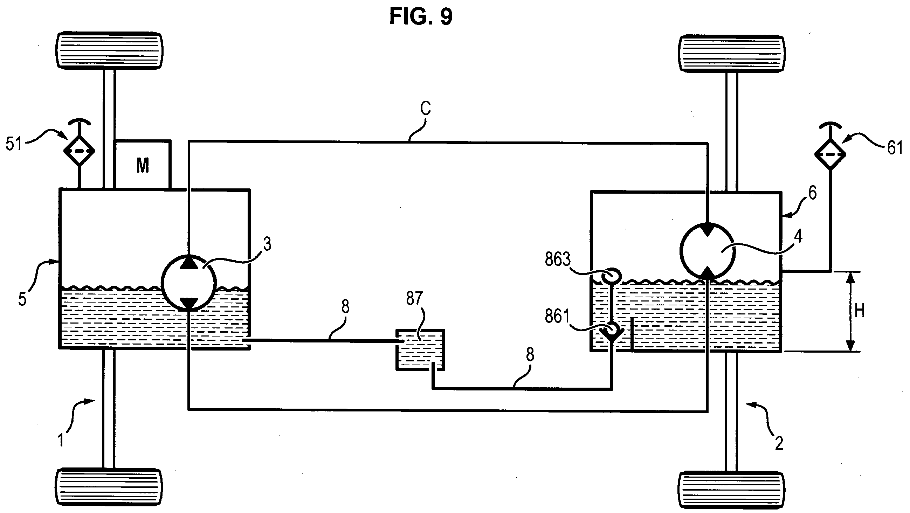

La figure 9 présente un autre mode de réalisation d'un véhicule selon l'invention.

Dans ce mode de réalisation, le conduit de drainage 8 comprend
- une chambre de drainage 87,
- une admission 861 dans le carter 6 du moteur hydraulique 4, munie d'une soupape 861 équipée d'un flotteur 863 définissant la valeur seuil du niveau d'huile dans le carter 6 du moteur hydraulique 4 à partir de
laquelle l'huile est évacuée du carter 6 du moteur hydraulique 4 par le conduit de drainage 8.
Le flotteur 863 est configuré pour ouvrir ladite soupape de l'admission 861 lorsque le niveau d'huile dans le carter 6 du moteur hydraulique 4 est au-delà de ladite valeur seuil.

L'huile ainsi prélevée dans le carter 6 du moteur hydraulique 4 est acheminée par le conduit de drainage 8 dans la chambre de drainage 87, puis dans le carter 5 de la pompe 3.

Le flotteur 863 est configuré de manière à ce que la chambre de drainage 87 soit maintenue remplie d'huile.

La soupape de l'admission 861 et le flotteur 863 sont avantageusement disposés dans une portion du carter 6 du moteur hydraulique 4 dans laquelle l'huile est peu perturbée, par exemple une portion du carter 6 entourée partiellement d'une cloison ou d'une paroi, de sorte que des remous dans l'huile ne perturbent pas le déplacement du flotteur 863.

Dans ce mode de réalisation, le carter 5 de la pompe 3 est commun avec le carter de la boite de vitesse du véhicule.
De plus, le carter 6 du moteur hydraulique 4 est dimensionné de manière à contenir un volume d'huile défini de manière à être inférieur ou égal à la variation du niveau d'huile possible dans le carter 5 de la pompe 3.

Plus précisément, on considère que
- le volume d'huile compris dans le carter 6 du moteur hydraulique 4 est compris entre 0 et V1,
- le carter 5 de la pompe 3 est dimensionné pour contenir un volume V2 d'huile, à une tolérance T2 près, c'est-à-dire qu'il est dimensionné pour contenir un volume d'huile compris entre V2-T2 et V2+T2.
Les valeurs V1 et T2 sont telles que T2 ≥ V1.

Le carter 5 de la pompe 3 est par exemple dimensionné de manière à avoir un volume de l'ordre de 10 fois ou plus celui du carter 6 du moteur hydraulique 4. Par exemple, si on considère que le carter 5 de la pompe 3 est dimensionné pour avoir un volume d'huile égal à 2 litres à 0,1 litres près, alors le carter 6 du moteur hydraulique 4 est dimensionné pour contenir un volume d'huile au maximum égal à 0,1 litre.

Le carter 6 du moteur hydraulique 4 comprend typiquement un reniflard 61, comprenant
- une admission d'air configurée de manière à être à une altitude supérieure à celle du carter 6 du moteur hydraulique 4,
- une connexion avec le carter 6 du moteur hydraulique 4, ladite connexion étant positionnée à une hauteur H du carter 6 du moteur hydraulique 4 et définissant un niveau d'huile maximum dans ledit carter 6 du moteur hydraulique 4.
De cette manière, le niveau d'huile ne dépasse pas le point de connexion entre le carter 6 et le reniflard 61, car l'air qui reste dans le carter 6 exerce alors une pression sur l'huile de manière à la faire sortir du carter 6 comme déjà décrit précédemment en référence au mode de réalisation présenté sur la figure 7.

Ce mode de réalisation permet d'obtenir un niveau d'huile sensiblement constant dans le carter 5 de la pompe 3 et de la boite de vitesse du véhicule, tout en conservant une structure simple et en ayant une trainée faible. Les deux carters 5 et 6 peuvent ainsi être maintenus en barbotage.

Les différents modes de réalisation présentés permettent ainsi de réaliser un contrôle du niveau d'huile entre deux carters, en assurant une évacuation d'huile du carter moteur vers le carter de pompe lorsque le niveau d'huile dans le carter moteur atteint une valeur seuil, assurant ainsi un équilibrage de niveau d'huile entre le carter moteur et le carter de pompe dans la mesure où l'huile a tendance à s'accumuler dans le carter moteur et non pas dans le carter de pompe du fait de l'action de la pompe.

## Revendications

1. Véhicule comprenant un châssis, un essieu menant (1), un essieu mené (2), un moteur primaire (M) adapté pour réaliser un entrainement de l'essieu menant (1), et un système d'assistance hydraulique comprenant une pompe (3) et un moteur (4) hydraulique comprenant chacun un carter (5, 6) et reliés par un circuit hydraulique (C) d'assistance,
ladite pompe hydraulique (3) étant disposée à proximité de l'essieu menant (1) et le moteur hydraulique étant disposé à proximité de l'essieu mené (2),
**caractérisé en ce que** lesdits carter (5, 6) de la pompe (3) et du moteur hydraulique (4) sont reliés par un conduit de drainage (8) assurant un échange d'huile entre lesdits carters (5, 6), lesdits carter (5, 6) de la pompe (3) et du moteur hydraulique (4) étant configurés de manière à définir une valeur seuil du niveau d'huile dans le carter (6) du moteur hydraulique (4) à partir de laquelle l'huile est évacuée du carter (6) du moteur hydraulique (4).

2. Véhicule selon la revendication 1, dans lequel ledit essieu mené (2) comprend un différentiel (94), le différentiel (94) de l'essieu mené (2) et le moteur hydraulique (4) ayant un carter commun (6).

3. Véhicule selon l'une des revendications 1 à 2, dans lequel le carter (5) de la pompe hydraulique (3) est configuré de manière à guider l'écoulement d'huile vers le conduit de gavage (7).

4. Véhicule selon l'une des revendications 1 à 3, comprenant en outre une boite de vitesse (92), et dans lequel ledit essieu menant (1) comprend un différentiel (93), le différentiel (93) de l'essieu menant (1), la boite de vitesse (92) et la pompe (3) ayant un carter commun (5).

5. Véhicule selon l'une des revendications 1 à 4, dans lequel :
- le carter (6) du moteur hydraulique (4) est un carter étanche dans lequel est inséré un volume initial d'huile, le restant du volume du carter (6) étant rempli d'air définissant une quantité d'air,
- le carter (5) de la pompe (3) est un carter ouvert comprenant un échangeur d'air,
le conduit de drainage (8) reliant le fond du carter (5) de la pompe (3) au fond du carter (6) du moteur hydraulique (4) de sorte que les orifices reliant le conduit de drainage (8) auxdits carters (5, 6) soient immergés dans l'huile, la valeur seuil du niveau d'huile dans le carter (6) du moteur hydraulique (4) à partir de laquelle l'huile est évacuée du carter (6) du moteur hydraulique (4) par le conduit de drainage (8) étant ainsi définie par la quantité d'air dans le carter (6) du moteur hydraulique (4).

6. Véhicule selon l'une des revendications 1 à 4, dans lequel :
- le carter (6) du moteur hydraulique (4) est un carter étanche rempli d'huile,
- le carter (5) de la pompe (3) est un carter ouvert comprenant un échangeur d'air,
le conduit de drainage (8) relie le fond du carter (5) de la pompe (3) au sommet du carter (6) du moteur hydraulique (4), la valeur seuil du niveau d'huile dans le carter (6) du moteur hydraulique (4) à partir de laquelle l'huile est évacuée du carter (6) du moteur hydraulique (4) par le conduit de drainage (8) étant ainsi le niveau d'huile pour lequel le carter (6) du moteur hydraulique (4) est rempli d'huile.

7. Véhicule selon l'une des revendications 1 à 4, dans lequel le conduit de drainage (8) comprend :
- une admission (851) dans le carter (5) de la pompe (3) ;
- un refoulement (852) dans le carter (5) de la pompe (3) ;
- une admission (861) dans le carter (6) du moteur hydraulique (4) ;
- un refoulement (862) dans le carter (6) du moteur hydraulique (4) ;
chacun desdits refoulements (852, 862) comprenant un clapet anti-retour configuré pour être passant uniquement du conduit de drainage (8) vers chacun desdits carters (5,6), et
l'admission (851) dans le carter (5) de la pompe (3) étant munie d'une soupape équipée d'un flotteur (853) configuré pour ouvrir ladite soupape lorsque le niveau d'huile dans le carter de la pompe (3) est au-delà d'une seconde valeur seuil,
l'admission (861) dans le carter (6) du moteur hydraulique (4) étant munie d'une soupape équipée d'un flotteur (863) définissant la valeur seuil du niveau d'huile dans le carter (6) du moteur hydraulique (4) à partir de laquelle l'huile est évacuée du carter (6) du moteur hydraulique (4) par le conduit de drainage (8) et étant configuré pour ouvrir ladite soupape lorsque le niveau d'huile dans le carter (6) du moteur hydraulique (4) est au-delà de ladite valeur seuil.

8. Véhicule selon la revendication 4, dans lequel
- le conduit de drainage (8) comprend une chambre de drainage (87),
- le conduit de drainage (8) est relié à la chambre de drainage (87) au moyen d'une soupape équipée d'un flotteur définissant la valeur seuil du niveau d'huile dans le carter (6) du moteur hydraulique (4) à partir de laquelle l'huile est évacuée du carter (6) du moteur hydraulique (4) par le conduit de drainage (8) et étant configuré pour ouvrir ladite soupape lorsque le niveau d'huile dans le carter du moteur hydraulique (43) est au-delà de ladite valeur seuil,
ledit flotteur étant configuré de manière à ce que la chambre de drainage soit maintenue remplie d'huile,
le carter (6) du moteur hydraulique (4) étant dimensionné de manière à contenir un volume d'huile compris entre 0 et V1,
le carter commun (5) à la boite de vitesse (92) et à la pompe (3) étant dimensionné de manière à contenir un volume d'huile V2 à une tolérance T2 près, avec T2 ≥ V1.

9. Véhicule selon la revendication 8, dans lequel le carter (6) du moteur hydraulique (4) comprend un reniflard (61) ledit reniflard (61) comprenant
- une admission d'air configurée de manière à être à une altitude supérieure à celle du carter (6) du moteur hydraulique (4),
- une connexion avec le carter (6) du moteur hydraulique (4), ladite connexion étant positionnée à une hauteur H du carter (6) du moteur hydraulique (4) et définissant un niveau d'huile maximum dans ledit carter (6) du moteur hydraulique (4).

10. Véhicule selon l'une des revendications 1 à 4, comprenant en outre un conduit de de retour (7) reliant le carter (6) du moteur hydraulique (4) au carter (5) de la pompe (3),
le conduit de retour (7) comprenant une pompe de retour (73) configurée pour, lorsque ladite assistance hydraulique est en service, prélever de l'huile dans le fond du carter (5) de la pompe hydraulique (3) de manière à l'injecter dans le carter (6) dudit moteur (4),
le conduit de drainage (8) étant reliée au carter (6) du moteur hydraulique (4) de manière à définir la valeur seuil du niveau d'huile dans le carter (6) du moteur hydraulique (4) à partir de laquelle l'huile est évacuée du carter (6) du moteur hydraulique (4) par le conduit de drainage (8), ladite valeur seuil variant en fonction de l'inclinaison du véhicule.

11. Véhicule selon la revendication 10, dans lequel le conduit de retour est configuré de manière à ce que pour des valeurs d'inclinaison du véhicule comprises entre +θmax et - θmax par rapport à un plan horizontal, le volume d'huile dans ledit carter (6) du moteur hydraulique (4) varie entre des valeurs Vmin et Vmax, avec Vmin non nul et Vmax inférieur au volume interne dudit carter (6).

12. Véhicule selon l'une des revendications 10 ou 11, dans lequel le conduit de drainage (8) comprend une pompe de drainage (83) adaptée pour assurer la circulation de l'huile du carter (6) du moteur hydraulique (4) vers le carter (5) de la pompe hydraulique (3), ladite pompe de drainage (83) étant couplée à un essieu dudit véhicule de manière à ce que la rotation des roues du véhicule entraine une mise en service de la pompe de drainage (83).

## Patentansprüche

1. Fahrzeug mit einem Fahrgestell, einer Antriebsachse (1), einer angetriebenen Achse (2), einem Primärmotor (M), der geeignet ist, einen Antrieb der Antriebsachse (1) durchzuführen, und einem hydraulischen Unterstützungssystem, das ein Pumpe (3) und einen Hydraulikmotor (4) umfasst, die jeweils ein Gehäuse (5, 6) umfassen und durch einen hydraulischen Unterstützungskreis (C) verbunden sind,
wobei die Hydraulikpumpe (3) in der Nähe der Antriebsachse (1) angeordnet ist und der Hydraulikmotor in der Nähe der angetriebenen Achse (2) angeordnet ist,
**dadurch gekennzeichnet, dass** die Gehäuse (5, 6) der Pumpe (3) und des Hydraulikmotors (4) durch ein Drainagerohr (8) verbunden sind, das einen Ölaustausch zwischen den Gehäusen (5, 6) gewährleistet, wobei die Gehäuse (5, 6) der Pumpe (3) und des Hydraulikmotors (4) derart konfiguriert sind, dass ein Grenzwert des Ölstands im Gehäuse (6) des Hydraulikmotors (4) festgelegt ist, ab dem das Öl aus dem Gehäuse (6) des Hydraulikmotors (4) abgeleitet wird.

2. Fahrzeug nach Anspruch 1, wobei die angetriebene Achse (2) ein Differential (94) umfasst, wobei das Differential (94) der angetriebenen Achse (2) und der Hydraulikmotor (4) ein gemeinsames Gehäuse (6) haben.

3. Fahrzeug nach einem der Ansprüche 1 bis 2, wobei das Gehäuse (5) der Hydraulikpumpe (3) derart konfiguriert ist, dass der Ölstrom zur Füllleitung (7) geleitet wird.

4. Fahrzeug nach einem der Ansprüche 1 bis 3, die ferner ein Getriebe (92) umfasst, und wobei die Antriebsachse (1) ein Differential (93) umfasst, wobei das Differential (93) der Antriebsachse (1), das Getriebe (92) und die Pumpe (3) ein gemeinsames Gehäuse (5) haben.

5. Fahrzeug nach einem der Ansprüche 1 bis 4, wobei:
- das Gehäuse (6) des Hydraulikmotors (4) ein dichtes Gehäuse ist, in das ein anfängliches Ölvolumen eingefüllt wird, wobei das restliche Volumen des Gehäuses (6) mit Luft gefüllt ist, das eine Luftmenge definiert,
- das Gehäuse (5) der Pumpe (3) ein offenes Gehäuse ist, das einen Luftaustauscher umfasst,
wobei die Drainageleitung (8), die den Boden des Gehäuses (5) der Pumpe (3) mit dem Boden des Gehäuses (6) des Hydraulikmotors (4) verbindet, so dass die Öffnungen, welche die Drainageleitung (8) mit den Gehäusen (5, 6) verbinden, in das Öl eingetaucht sind, wobei der Grenzwert des Ölstands in dem Gehäuse (6) des Hydraulikmotors (4), ab dem das Öl aus dem Gehäuse (6) des Hydraulikmotors (4) durch die Drainageleitung (8) abgeleitet wird, somit durch die Luftmenge in dem Gehäuse (6) des Hydraulikmotors (4) definiert ist.

6. Fahrzeug nach einem der Ansprüche 1 bis 4, wobei:
- das Gehäuse (6) des Hydraulikmotors (4) ein dichtes, mit Öl gefülltes Gehäuse ist,
- das Gehäuse (5) der Pumpe (3) ein offenes Gehäuse ist, das einen Luftaustauscher umfasst,
wobei die Drainageleitung (8) den Boden des Gehäuses (5) der Pumpe (3) mit der Spitze des Gehäuses (6) des Hydraulikmotors (4) verbindet, wobei der Grenzwert des Ölstands in dem Gehäuse (6) des Hydraulikmotors (4), ab dem das Öl aus dem Gehäuse (6) des Hydraulikmotors (4) durch die Drainageleitung (8) abgeleitet wird, somit der Ölstand ist, für welchen das Gehäuse (6) des Hydraulikmotors (4) mit Öl gefüllt ist.

7. Fahrzeug nach einem der Ansprüche 1 bis 4, wobei das Drainagerohr (8) umfasst:
- einen Einlass (851) im Gehäuse (5) der Pumpe (3),
- einen Auslass (852) im Gehäuse (5) der Pumpe (3),
- einen Einlass (861) im Gehäuse (6) des Hydraulikmotors (4),
- einen Auslass (862) im Gehäuse (6) des Hydraulikmotors (4),
wobei jeder Auslässe (852, 862) ein Sperrventil umfasst, das konfiguriert ist, um nur von der Drainageleitung (8) zu jedem der Gehäuse (5, 6) durchgängig zu sein, und
wobei der Einlass (851) im Gehäuse (5) der Pumpe (3) mit einem Ventil ausgestattet ist, das mit einem Schwimmer (853) versehen ist, der konfiguriert ist, um das Ventil zu öffnen, wenn der Ölstand im Gehäuse der Pumpe (3) jenseits eines zweiten Grenzwerts liegt,
wobei der Einlass (861) im Gehäuse (6) des Hydraulikmotors (4) mit einem Ventil ausgestattet ist, das mit einem Schwimmer (863) versehen ist, der den Grenzwert des Ölstands im Gehäuse (6) des Hydraulikmotors (4) definiert, ab dem das Öl aus dem Gehäuse (6) des Hydraulikmotors (4) durch die Drainageleitung (8) abgeleitet wird und konfiguriert ist, um das Ventil zu öffnen, wenn der Ölstand im Gehäuse (6) des Hydraulikmotors (4) jenseits des Grenzwerts liegt.

8. Fahrzeug nach Anspruch 4, wobei
- die Drainageleitung (8) eine Drainagekammer (87) umfasst,
- die Drainageleitung (8) mit der Drainagekammer (87) mittels eines Ventils verbunden ist, das mit einem Schwimmer versehen ist, welcher den Grenzwert des Ölstandes im Gehäuse (6) des Hydraulikmotors (4) definiert, ab dem das Öl aus dem Gehäuse (6) des Hydraulikmotors (4) durch die Drainageleitung (8) abgeleitet wird und konfiguriert ist, um das Ventil zu öffnen, wenn der Ölstand im Gehäuse des Hydraulikmotors (43) jenseits des Grenzwerts liegt,
wobei der Schwimmer derart konfiguriert ist, dass die Drainagekammer mit Öl gefüllt bleibt,
wobei das Gehäuse (6) des Hydraulikmotors (4) so bemessen ist, dass es ein Ölvolumen zwischen 0 und V1 enthält,
wobei das gemeinsame Gehäuse (5) des Getriebes (92) und der Pumpe (3) so bemessen ist, dass es ein Ölvolumen V2 mit einer Toleranz von zirka T2 mit T2 ≥ V1 enthält.

9. Fahrzeug nach Anspruch 8, wobei das Gehäuse (6) des Hydraulikmotors (4) einen Entlüfter (61) umfasst, wobei der Entlüfter (61) umfasst
- einen Lufteinlass, der derart konfiguriert ist, um auf einer Höhe zu sein, die höher als die des Gehäuses (6) des Hydraulikmotors (4) ist,
- eine Verbindung mit dem Gehäuse (6) des Hydraulikmotors (4), wobei die Verbindung in einer Höhe H des Gehäuses (6) des Hydraulikmotors (4) positioniert ist und einen maximalen Ölstand im Gehäuse (6) des Hydraulikmotors (4) definiert.

10. Fahrzeug nach einem der Ansprüche 1 bis 4, das ferner eine Rücklaufleitung (7) umfasst, die das Gehäuse (6) des Hydraulikmotors (4) mit dem Gehäuse (5) der Pumpe (3) verbindet,
wobei die Rücklaufleitung (7) eine Rückförderpumpe (73) umfasst, die konfiguriert ist, um, wenn die Hydraulikunterstützung im Betrieb ist, Öl vom Boden des Gehäuses (5) der Hydraulikpumpe (3) derart zu entnehmen, dass es in das Gehäuse (6) des Motors (4) geleitet wird,
wobei die Drainageleitung (8) mit dem Gehäuse (6) des Hydraulikmotors (4) derart verbunden ist, dass der Grenzwert des Ölstands im Gehäuse (6) des Hydraulikmotors (4) definiert wird, ab dem das Öl aus dem Gehäuse (6) des Hydraulikmotors (4) durch die Drainageleitung (8) abgeleitet wird, wobei der Grenzwert in Abhängigkeit von der Neigung des Fahrzeugs schwankt.

11. Fahrzeug nach Anspruch 10, wobei die Rücklaufleitung derart konfiguriert ist, dass für Neigungswerte des Fahrzeugs zwischen +θmax und -θmax in Bezug zu einer horizontalen Ebene das Ölvolumen im Gehäuse (6) des Hydraulikmotors (4) zwischen Werten Vmin und Vmax mit Vmin ungleich Null und Vmax kleiner als das Innenvolumen des Gehäuses (6) schwankt.

12. Fahrzeug nach einem der Ansprüche 10 oder 11, wobei die Drainageleitung (8) eine Drainagepumpe (83) umfasst, die geeignet ist, die Zirkulation von Öl aus dem Gehäuse (6) des Hydraulikmotors (4) zum Gehäuse (5) der Hydraulikpumpe (3) zu gewährleisten, wobei die Drainagepumpe (83) mit einer Achse des Fahrzeugs derart gekoppelt ist, dass die Drehung der Räder des Fahrzeugs zu einer Inbetriebnahme der Drainagepumpe (83) führt.

## Claims

1. A vehicle comprising a chassis, a driving axle (1), a driven axle (2), a primary motor (M) adapted for achieving driving of the driving axle (1), and a hydraulic assistance system comprising a pump (3) and a hydraulic motor (4) each comprising a casing (5, 6) and connected through a hydraulic assistance circuit (C),
said hydraulic pump (3) being positioned in proximity to the driving axle (1) and the hydraulic motor being positioned in proximity to the driven axle (2),
**characterized in that** said casings (5, 6) of the pump (3) and of the hydraulic motor (4) are connected through a draining conduit (8) ensuring oil exchange between said casings (5, 6), said casings (5, 6) of the pump (3) and of the hydraulic motor (4) being configured so as to define a threshold value of the oil level in the casing (6) of the hydraulic motor (4) from which the oil is discharged from the casing (6) of the hydraulic motor (4).

2. The vehicle according to claim 1, wherein said driven axle (2) comprises a differential (94), the differential (94) of the driven axle (2) and the hydraulic motor (4) having a common casing (6).

3. The vehicle according to one of claims 1 to 2, wherein the casing (5) of the hydraulic pump (3) is configured so as to guide the oil flow towards the feeding conduit (7).

4. The vehicle according to one of claims 1 to 3, further comprising a gearbox (92), and wherein said driving axle (1) comprises a differential (93), the differential (93) of the driving axle (1), the gearbox (92) and the pump (3) having a common casing (5).

5. The vehicle according to one of claims 1 to 4, wherein:
- the casing (6) of the hydraulic motor (4) is a sealed casing into which it is inserted an initial volume of oil, the remainder of the volume of the casing (6) being filled with the air defining an amount of air,
- the casing (5) of the pump (3) is an open casing comprising an air exchanger,
the draining conduit (8) connecting the bottom of the casing (5) of the pump (3) to the bottom of the casing (6) of the hydraulic motor (4) so that the orifices connecting the draining conduit (8) to said casings (5, 6) are immersed in the oil, the threshold value of the oil level in the casing (6) of the hydraulic motor (4) from which the oil is discharged from the casing (6) of the hydraulic motor (4) through the draining conduit (8) being thus defined by the amount of air in the casing (6) of the hydraulic motor (4).

6. The vehicle according to one of claims 1 to 4, wherein:
- the casing (6) of the hydraulic motor (4) is a sealed casing filled with oil,
- the casing (5) of the pump (3) is an open casing comprising an air exchanger,
the draining conduit (8) connects the bottom of the casing (5) of the pump (3) to the top of the casing (6) of the hydraulic motor (4), the threshold value of the oil level in the casing (6) of the hydraulic motor (4) from which the oil is discharged from the casing (6) of the hydraulic motor (4) through the draining conduit (8) thus being the oil level for which the casing (6) of the hydraulic motor (4) is filled with oil.

7. The vehicle according to one of claims 1 to 4, wherein the draining conduit (8) comprises:
- an admission (851) in the casing (5) of the pump (3);
- a discharge (852) in the casing (5) of the pump (3);
- an admission (861) in the casing (6) of the hydraulic motor (4);
- a discharge (862) in the casing (6) of the hydraulic motor (4);
each of said discharges (852, 862) comprising an anti-return valve configured for only letting through from the draining conduit (8) to each of said casings (5, 6), and
the admission (851) in the casing (5) of the pump (3) being provided with a valve equipped with a float (853) configured for opening said valve when the oil level in the casing of the pump (3) is beyond a second threshold value,
the admission (861) in the casing (6) of the hydraulic motor (4) being provided with a valve equipped with a float (863) defining the threshold value of the oil level in the casing (6) of the hydraulic motor (4) from which the oil is discharged from the casing (6) of the hydraulic motor (4) through the draining conduit (8) and being configured for opening said valve when the oil level in the casing (6) of the hydraulic motor (4) is beyond said threshold value.

8. The vehicle according to claim 4, wherein
- the draining conduit (8) comprises a draining chamber (87),
- the draining conduit (8) is connected to the draining chamber (87) by means of a valve equipped with a float defining the threshold value of the oil level in the casing (6) of the hydraulic motor (4) from which the oil is discharged from the casing (6) of the hydraulic motor (4) through the draining conduit (8) and being configured for opening said valve when the oil level in the casing of the hydraulic motor (43) is beyond said threshold value,
said float being configured so that the draining chamber is maintained filled with oil,
the casing (6) of the hydraulic motor (4) being dimensioned so as to contain a volume of oil comprised between 0 and V1,
the casing (5) common to the gearbox (92) and to the pump (3) being dimensioned so as to contain a volume of oil V2 to within a tolerance T2, with T2 ≥ V1.

9. The vehicle according to claim 8, wherein the casing (6) of the hydraulic motor (4) comprises a vent pipe (61), said vent pipe (61) comprising
- an admission of air configured so as to be at an altitude greater than that of the casing (6) of the hydraulic motor (4),
- a connection with the casing (6) of the hydraulic motor (4), said connection being positioned at a height H of the casing (6) of the hydraulic motor (4) and defining a maximum oil level in said casing (6) of the hydraulic motor (4).

10. The vehicle according to one of claims 1 to 4, further comprising a return conduit (7) connecting the casing (6) of the hydraulic motor (4) to the casing (5) of the pump (3),
the return conduit (7) comprising a return pump (73) configured for, when said hydraulic assistance is operating, picking up on oil from the bottom of the casing (5) of the hydraulic pump (3) so as to inject it into the casing (6) of said motor (4),
the draining conduit (8) being connected to the casing (6) of the hydraulic motor (4) so as to define the threshold value of the oil level in the casing (6) of the hydraulic motor (4) from which the oil is discharged from the casing (6) of the hydraulic motor (4) through the draining conduit (8), said threshold value varying according to the tilt of the vehicle.

11. The vehicle according to claim 10, wherein the return conduit is configured so that for tilt values of the vehicle comprised between +θmax and -θmax relatively to a horizontal plane, the oil volume in said casing (6) of the hydraulic motor (4) varies between values Vmin and Vmax, with Vmin non-zero and Vmax less than the internal volume of said casing (6).

12. The vehicle according to one of claims 10 or 11, wherein the draining conduit (8) comprises a draining pump (83) adapted to ensuring circulation of the oil from the casing (6) of the hydraulic motor (4) to the casing (5) of the hydraulic pump (3), said draining pump (83) being coupled with an axle of said vehicle so that the rotation of the wheels of the vehicle causes operation of the draining pump (83).
